Europäisches Patentamt

European Patent Office

Office européen des brevets

(11) Veröffentlichungsnummer: **0 440 018 A1**

# EUROPÄISCHE PATENTANMELDUNG

(21) Anmeldenummer: 91100086.7

(51) Int. Cl.5: **B62K 19/42**, B60C 23/10

(22) Anmeldetag: 02.01.91

(30) Priorität: 31.01.90 DE 4002827

(43) Veröffentlichungstag der Anmeldung:
07.08.91 Patentblatt 91/32

(84) Benannte Vertragsstaaten:
AT BE CH DK ES FR GB GR IT LI NL SE

(71) Anmelder: Wilhelms, Rolf, Dr.
Preysingstrasse 11
W-8000 München 80(DE)

(72) Erfinder: Wilhelms, Rolf, Dr.
Preysingstrasse 11
W-8000 München 80(DE)

(74) Vertreter: WILHELMS, KILIAN & PARTNER
Patentanwälte
Eduard-Schmid-Strasse 2
W-8000 München 90(DE)

(54) Fahrrad mit integrierter Luftpumpe.

(57) Fahrrad, bei dem mindestens ein Bereich des rohrförmigen Rahmens als Luftpumpenbereich (1) mit einem Luftauslaß (4) der im vorderen Teil des Luftpumpenbereichs ausgebildet ist, in dem ein Luftkolben (5) an einer Luftkolbenstange (6) angeordnet ist, die außerhalb des Luftpumpenbereichs (1) in einem Pumpengriff (7) endet.

# Fig. 1

## HERRENFAHRRAD MIT INTEGRIERTER LUFTPUMPE

Die Erfindung betrifft ein Herrenfahrrad gemäß Oberbegriff des Patentanspruchs 1.

Ein solches Herrenfahrrad ist aus der DE 36 02 279 A1 bekannt. Dieses Herrenfahrrad mit integrierter Fahrradluftpumpe besitzt einen Längsschlitz im oberen Rahmenrohr, der dessen Stabilität verringert, und der etwa der Länge der Pumpenkolbenstange entspricht. Der Gesamtbereich des horizontal angeordneten Rahmenrohres, der der integrierten Pumpe funktionell angepaßt werden muß, ist zumindestens gleich dem doppelten Pumpweg. Der Griff umschließt das Rahmenrohr und ist mit einem in den Rohrrahmen durch den Längsschnitt hineinragenden Zapfen versehen, an dem die Pumpenkolbenstange befestigt ist.

Nachteilig an dieser integrierten Luftpumpenkonstruktion ist der Umstand, daß das entsprechende Herrenfahrrad bei der Herstellung wesentlich umgestaltet werden muß und daß gleichzeitig das obere Rahmenrohr in seiner Stabilität verringert wird; schließlich ist nicht gelöst, wie beim Defekt des Pumpengriffs, der Kolbenstange, des Pumpenkolbens und/oder der Zapfenverbindung zwischen Luftpumpengriff und Kolbenstange eine Reparatur erfolgen kann.

Es ist zudem zu erwarten, daß die Pumpbewegung des speziellen Luftpumpengriffteils den anliegenden Fahrradrohrrahmenbereich auf Dauer beschädigt.

Schließlich bedarf es einer sehr speziellen Verbindung von Pumpenkolbenstange und Griffteil, die bei Fahrradpumpen nicht üblich ist.

Ein weiteres Fahrrad mit integrierter Luftpumpe ist in der CH 320179 beschrieben. Hierbei ist die Luftpumpe in der Sattelstange angeordnet und weist den grundsätzlichen Nachteil auf, daß zu seiner Bedienung der Sattel in irgendeiner Weise verschwenkt werden muß; entsprechend ist die Verschwenkbarkeit des Sattels Gegenstand der schweizerischen Veröffentlichung, wobei offensichtlich die Lösung konstruktionsmäßig überaus aufwendig ist.

Aufgabe der Erfindung ist es, ein Herrenfahrrad der eingangs genannten Art zur Verfügung zu stellen, bei dem die Herstellung des Fahrrades nur geringe Änderungen im an sich üblichen Herstellungsverfahren für Fahrräder erfordert, und gleichzeitig an sich bekannte Luftpumpenbauteile, wie Luftkolben, Luftkolbenstange und Pumpengriff verwendbar sein sollen; gleichzeitig soll die Konstruktion einfach und funktionssicher sein.

Die erfindungsgemäße Aufgabe wird durch die kennzeichnenden Merkmale des Anspruchs 1 gelöst. Weitere vorteilhafte Ausgestaltungen der Erfindung ergeben sich aus den nachfolgenden Ansprüchen 2 und 3.

Bei dem erfindungsgemäßen Fahrrad wird im horizontal angeordneten oberen Rahmenrohr ein Luftpumpenbereich ausgebildet.

Wie bei einer an sich bekannten Fahrradluftpumpe besteht der diesbezügliche Teil des Rahmenrohres aus einem verschlossenen Hohlrohr mit einem Auslaßventil, an dem, ansteckbar oder aufschraubbar, ein Schlauch angeordnet ist, der längenmäßig zumindest der Distanz zwischen Luftauslaß und Fahrradventil entspricht. Hierbei gilt als bevorzugte Entfernung die zwischen Luftauslaß und dem Ventil des Rades, daß am weitestens vom Luftauslaß entfernt ist, wenn das Ventil dieses Rades so nahe wie möglich an das Auslaßventil durch Drehung des Rades herangebracht wird.

In dem rohrförmigen Luftpumpenbereich befindet sich ein starrer oder verformbarer Luftkolben in einer Ausführung, wie sie an sich bei Luftpumpen für Fahrräder bekannt ist.

Dieser Luftkolben ist an der Spitze der Luftkolbenstange angeordnet, die am Ende den Pumpengriff aufweist. Die Luftkolbenstange wird durch eine beispielsweise aufsteckbare oder aufschraubbare Abdichtung des Endes des rohrförmigen Pumpenkörpers geführt.

Ausführungsbeispiele der Erfindung werden anhand der folgenden Fig. 1 bis 3b näher erläutert.

Fig. 1 ist die schematische Seitenansicht eines erfindungsgemäßen Fahrrades;

Fig. 2a und 2b ist eine erste Ausführung des Sattelbereichs bei einem erfindungsgemäßen Fahrrad gemäß Fig. 1.

Fig. 3a und 3b ist eine zweite Ausführung des Sattelbereichs bei einem erfindungsgemäßen Fahrrad gemäß Fig. 1.

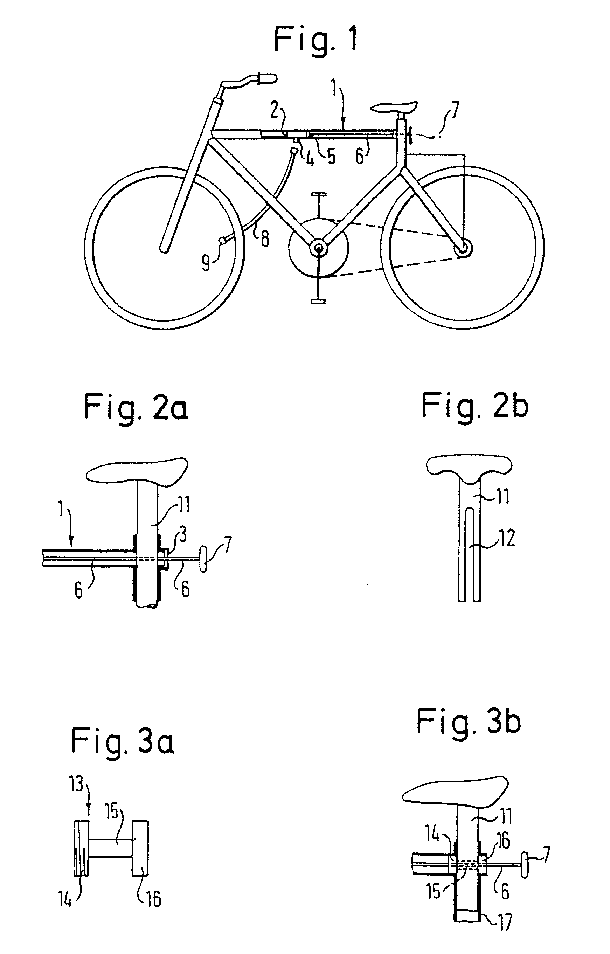

Das erfindungsgemäße Fahrrad gemäß Fig. 1 weist im hinteren Bereich des horizontalen Rohres des Fahrradrahmens den Luftpumpenbereich 1 auf.

Dieses Rahmenrohr ist im vorderen Bereich durch eine Wand oder Pfropfen 2 luftdicht verschlossen, wobei sich in unmittelbarer Nähe innerhalb des Luftpumpenbereichs 1 der Luftauslaß 4 befindet. Im Sattelbereich ist dieses Rohr mit einer Abschlußkappe 3 versehen, die auf das Rohrende aufsteckbar oder aufschraubbar ausgebildet ist, und das Herausziehen von Luftkolben 5 mit Luftkolbenstange 6 zur Pflege oder Reparatur ermöglicht.

In dem Luftpumpenbereich 1 befindet sich der Luftpumpenkolben 5 an der Spitze der Luftkolbenstange 6, die beweglich mittig durch die Abschlußkape 3 aus dem Luftpumpenbereich 1 geführt ist und in einem Pumpengriff 7 endet.

Im Bereich der Wand oder des Pfropfens 2, der den Luftpumpenbereich 1 nach vorne hin abschließt, befindet sich der Luftauslaß 4, an dem aufschraubbar oder aufsteckbar ein Schlauch 8 angeordnet ist, der an seinem freien Ende 9 ein Kopplungsstück zum Aufstecken auf ein Reifenventil aufweist.

Bei den üblichen Herrenfahrrädern gemäß Fig. 1 ergibt sich die Notwendigkeit, den Durchtritt der Sattelstange 11 durch den Luftpumpenbereich 1 des oberen Rahmenrohres zu gewährleisten (Fig. 2a). Dieses kann dadurch geschehen, daß die rohrförmige Sattelstange 11 gemäß Fig. 2b einen Längsschlitz 12 aufweist, durch den die Luftkolbenstange 6 bei Normalstellung des Sattels frei durchtritt, wobei die Luftkolbenstange 6 die Abschlußkappe 3 ebenfalls durchtritt.

Bei einer bevorzugten Ausführungsform kann zur Lagerung und Sicherung der Luftkolbenstange 6 im Sattelbereich ein Bauteil 13 (Fig. 3a) vorgesehen sein, das von hinten in den hinteren Bereich des Luftpumpenbereichs 1 des Rahmenrohres eingeschraubt oder eingesteckt wird.

In diesem Fall befindet sich im Luftpumpenbereich 1 vor dem Durchführungsschacht für die Sattelstange 11 innenliegend beispielsweise ein Gewinde, das mit dem Außengewinde des ringförmigen Kopfteils 14 des Bauteils 13 korrespondiert; das Mittelteil 15 des Bauteils 13 ist ein mit dem Kopfteil 14 einstückig verbundenes Rohrteil zur Durchführung der Luftkolbenstange 6; das sich einstückig anschließende Endteil 16 ist ebenfalls ringförmig ausgebildet und besitzt ebenfalls eine mittig angeordnete Öffnung zum Durchtritt der Luftkolbenstange 6. Ferner sind an dem Endteil 16 des Bauteils 13 bevorzugt Mittel vorgesehen, um ein Werkzeug zum Einschrauben oder Verriegeln des Kopfteils 14 in den Endbereich des Luftpumpenbereichs 1 zu ermöglichen. Der Außendurchmesser des rohrförmigen Mittelteils 15 des Bauteils 13 ist etwa gleich oder kleiner als die Breite des Längsschlitzes 12 in der Sattelstange 11.

In Fig. 3b ist der Sattelbereich des erfindungsgemäßen Rades mit eingeschraubtem oder eingestecktem Bauteil 13 schematisch wiedergegeben. Weil es sich um eine Seitenansicht handelt, ist der Längsschlitz 12 in der Sattelstange 11, den das Mittelteil 15 des Bauteils 13 durchtritt, nicht abgebildet. Im übrigen entsprechen die Bezugszeichen den zuvor beschriebenen Teilen. Bei dieser Ausführungsform kann die übliche schellenförmige Fixierung der Sattelstange 11 im senkrecht verlaufenden Rahmenrohrende 17 um 90° gedreht und damit seitwärts vom Sattel und/oder in einer kurzen Verlängerung des Rahmenrohrendes 17 oberhalb der Oberkante des Luftpumpenbereichs 1 angeordnet bzw. ausgebildet sein.

**Patentansprüche**

1. Herrenfahrrad, bei dem das horizontal angeordnete obere Rahmenrohr im sattelstangenseitigen Bereich als Luftpumpenbereich (1) ausgebildet ist, in dem ein Luftkolben (5) an einer Luftkolbenstange (6), deren Ende mit einem Pumpengriff (7) verbunden ist, geführt ist, wobei ein vor dem Luftkolben (5) liegender, luftdicht verschlossener vorderer Teil des Luftpumpenbereichs (1) einen Luftauslaß (4) aufweist, dadurch gekennzeichnet, daß der vordere Teil des Luftpumpenbereichs (1) in Fahrtrichtung gesehen vorn angeordnet und nach vorne hin durch eine innenliegende Wand oder einen Pfropfen (2) luftdicht verschlossen ist und daß die endseitig und außerhalb des Luftpumpenbereichs (1) mit dem Pumpengriff (7) versehene Luftkolbenstange (6) mittig durch eine Öffnung einer den hinteren Endbereich des Luftpumpenbereichs (1) verschließenden weiteren Wand (Abschlußkappe 3; Bauteil 13) und durch die Sattelstange (11) geführt ist, wobei die Sattelstange (11) einen Längsschlitz (12) für den freien Durchtritt der Luftkolbenstange (6) aufweist.

2. Herrenfahrrad nach Anspruch 1, dadurch gekennzeichnet, daß als weitere Wand ein Bauteil (13) vorgesehen ist, das von hinten in den hinteren Bereich des Luftpumpenbereichs (1) einschraubbar oder einsteckbar ist, wobei das Bauteil (13) ein Kopfteil (14) und ein Endteil (16) aufweist, die ringförmig ausgebildet sind und einstückig durch ein Rohrteil (15) verbunden sind, wobei das Bauteil (13) eine mittig angeordnete Öffnung zum Durchtritt der Luftkolbenstange (6) aufweist, und wobei das Rohrteil (15) einen Durchmesser aufweist, der gleich oder kleiner der Breite des Längsschlitzes (12) in der Sattelstange (11) ist.

3. Herrenfahrrad nach einem der vorhergehenden Ansprüche, dadurch gekennzeichnet, daß an dem Luftauslaß (4) ein aufsteck- oder aufschraubbarer Verbindungsschlauch (8) angeordnet ist, dessen freies Ende zur aufsteckbaren und/oder aufschraubbaren Verbindung mit den Einlaßventilen der aufzupumpenden Fahrradschläuche ausgebildet ist.

# Fig. 1

# Fig. 2a

# Fig. 2b

# Fig. 3a

# Fig. 3b

**Europäisches Patentamt**

# EUROPÄISCHER RECHERCHENBERICHT

Nummer der Anmeldung

## EP 91 10 0086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 602 279 (M.GAJDA) <br> * das ganze Dokument * <br> – – – | 1,3 | B 62 <br> K 19/42 <br> B 60 C 23/10 |
| A | FR-A-4 728 19 (J.JOHNSON) <br> * das ganze Dokument * <br> – – – | 1,3 | |
| A | FR-A-4 486 05 (A.TALKE) <br> * das ganze Dokument * <br> – – – | 1 | |
| A | FR-A-7 092 65 (J.BEAU) <br> * das ganze Dokument * <br> – – – – – | 1,3 | |
| | | | **RECHERCHIERTE SACHGEBIETE (Int. Cl.5)** <br><br> B 62 K <br> B 60 C <br> B 62 J <br> F <br> 04 B |

Der vorliegende Recherchenbericht wurde für alle Patentansprüche erstellt

| Recherchenort | Abschlußdatum der Recherche | Prüfer |
|---|---|---|
| Den Haag | 10 Mai 91 | CZAJKOWSKI A.R. |